# EUROPÄISCHE PATENTSCHRIFT

(11) **EP 1 520 124 B1**
(45) Veröffentlichungstag und Bekanntmachung des Hinweises auf die Patenterteilung: **30.08.2006**
(21) Anmeldenummer: 03762457.4
(22) Anmeldetag: 08.07.2003
(51) Int. Cl.: F16H 59/04, G05G 9/047

(54) **BEWEGUNGSÜBERSETZER FÜR EINE ISODISTANTE SCHALTSENSORIK**
MOTION TRANSLATOR FOR AN EQUIDISTANT SHIFTING SENSOR SYSTEM
DISPOSITIF DE TRANSMISSION DE MOUVEMENT DESTINE A UN SYSTEME DE CAPTEURS DE PASSAGE DE VITESSES EQUIDISTANTS

(30) Priorität: 09.07.2002 DE 10231015
(43) Veröffentlichungstag der Anmeldung: 06.04.2005
(73) Patentinhaber: ZF Lemförder Metallwaren AG, 49448 Lemförde (DE)
(72) Erfinder: GIEFER, Andreas, 49448 Lemförde (DE); MEYER, Jörg, 49419 Wagenfeld (DE)
(86) Internationale Anmeldenummer: PCT/DE2003/002282
(87) Internationale Veröffentlichungsnummer: WO 2004/005765

(56) Entgegenhaltungen:
- WO-A-99/11951
- DE-A- 19 918 508
- FR-A- 2 692 956
- US-A- 5 243 871

## Beschreibung

Die Erfindung betrifft ein System zur elektromechanischen Getriebebetätigung, insbesondere ein System zum Erfassen von Schalthebelstellungen.

Elektromechanische Schaltsysteme dienen zum Übertragen der Stellbewegung eines Schalthebels auf eine entsprechende Schaltstellung eines Getriebes. Statt der klassischen Übertragung der Schalthebelstellung über Seilzüge und Schaltgestänge an das Getriebe wird eine Sensorik verwendet, die aus einem Zusammenwirken von Aktuatoren und Sensoren die jeweils aktuelle Schalthebelstellung erfasst. Die Identität der ermittelten Schalthebelstellung wird mit elektrischen, elektronischen, elektro-optischen oder dergleichen Mitteln an eine Steuereinheit des Getriebes übertragen und von dieser in einen entsprechenden Schaltzustand des Getriebes umgesetzt. Derartige Schaltsysteme sind gegenwärtig unter der Bezeichnung Shift-by-Wire bekannt. Sie finden bevorzugt bei automatisierten Schaltgetrieben oder Automatikgetrieben Verwendung. Automatisierte Schaltgetriebe können kostengünstiger, leichter und kompakter als Automatikgetriebe hergestellt werden. Dadurch und insbesondere in Verbindung mit dem systembedingten hohen Wirkungsgrad wird dem automatisierten Schaltgetriebe große Bedeutung in der künftigen Entwicklung von Kraftfahrzeugen beigemessen.

Die Schalthebelstellung wird bei elektromechanischen Schaltsystemen oft mit magnetisch oder optisch wirkenden Sensoren, wie z.B. Hallsensoren, Optoreflexsensoren oder dergleichen erfasst. Bei der Schalthebelbewegung wird zwischen zwei Bewegungsräumen unterschieden, die den Schwenkrichtungen des Schalthebels um zwei Schwenkachsen entsprechen. Der Bewegungsraum 'Wählen' umfasst bevorzugt eine Veränderung der Schalthebelposition in einer ersten Richtung, der Bewegungsraum 'Schalten' quer zur dieser Richtung. Im Fall orthogonaler Bewegungsräume sind auch die beiden Schwenkachsen senkrecht zueinander angeordnet, wobei die erste Richtung z.B. der Fahrzeugrichtung entsprechen kann. Es ist aber auch möglich, dass die erste Richtung quer zur Fahrzeugrichtung verläuft. Die Stellung eines Schalthebels wird entsprechend für beide Bewegungsräume getrennt erfasst. Die mit einer bestimmten Schalthebelstellung ausgewählte Getriebeschaltung ergibt sich aus der Kombination der Projektionen dieser Stellung auf die Bewegungsräume 'Wählen' und 'Schalten'.

Um den Produktionsaufwand für ein elektromechanisches Schalthebelmodul gering zu halten, werden die Sensoren für die Bewegungsräume 'Wählen' und 'Schalten' auf einer einzigen planaren, d.h. ebenen und nicht gekrümmten Leiterplatte aufgenommen. Der Aktuator ist mit dem Schalthebel mechanisch verbunden und gegenüber der Leiterplatte mit den Sensoren angeordnet. Da eine Veränderung der Schalthebelstellung durch Schwenken des Schalthebels erfolgt, variiert bei diesem Konzept der lichte Abstand zwischen dem Aktuator und einem Sensor mit der Schaltstellung des Schalthebels.

Der Wirkungsbereich der Aktuatoren ist im Allgemeinen räumlich sehr eng begrenzt, so dass hierbei die Sensoren unterschiedlich angesprochen werden. Wird beispielsweise eine magnetische Sensorik mit einem Permanentmagneten als Aktuator verwendet, so weist das aktivierende Magnetfeld eine Gaußverteilung der Magnetfeldkontur auf. Breite und Stärke der Verteilung ändern sich mit dem Abstand vom Magneten. Die Einschalt- bzw. Ausschaltschwellen der magnetfeldempfindlichen Sensoren wie beispielsweise von Hallsensoren sind daher für jede Schaltposition unterschiedlich.

Um diesem Effekt entgegenzuwirken, kann eine Leiterplatte so gekrümmt ausgeführt werden, dass die Abstände zwischen dem Aktuator und den jeweiligen Sensoren bei den verschiedenen Schaltzuständen konstant gehalten sind. Die Herstellung einer entsprechend gekrümmten Leiterplatte ist allerdings mit großem Aufwand und damit hohen Produktionskosten verbunden. Alternativ kann ein Sensor individuell für jede Schaltstellung ausgelegt werden. Jedoch bedingt auch diese Lösung erhebliche Mehrkosten in der Herstellung.

Mit Hilfe eines vom Schalthebel mitgeführten Schiebersystems kann eine ebene Sensorik realisiert werden. Diese Lösung ist konstruktiv sehr aufwendig und hat neben den dadurch verursachten Mehrkosten in der Herstellung den Nachteil, dass die Toleranzkette in der Erfassung der Schalthebelstellung weiter verlängert wird.

Eine technisch gute Lösung bietet eine Anordnung von zwei planaren Leiterplatten orthogonal zueinander. Jede der nicht gekrümmten Leiterplatten trägt hierbei die ebene Sensorik für jeweils nur einen der Bewegungsräume 'Wählen' oder 'Schalten', so dass sich die Abstände der Aktuatoren zu den jeweiligen Sensoren nicht für die verschienenen Schalthebelstellungen verändern. Da sich jede Schaltstellung aus einer'Wählen'-kombiniert mit einer 'Schalten'-Position zusammensetzt, sind bei dieser Lösung neben zwei Aktuatoren auch erheblich mehr Sensoren erforderlich, als bei einer der oben angesprochenen Lösungskonzepte. Ferner müssen die Anschlüsse beider Platinen zusammengeführt werden, so dass sich die Realisierung dieser Lösung äußerst aufwendig und kostenintensiv gestaltet.

Aus der WO 99/11951 ist eine Vorrichtung zum Übersetzen einer zweiachsigen Schwenkbewegung eines Schalthebels in eine planare Bewegung eines Schalthebelpositionsgebers mit einem Führungselement zur Beschränkung der Bewegung des Schalthebelpositionsgebers auf eine Bewegung in einer nichtgekrümmten Ebene bekannt, bei der ein Übertragungselement zum Übertragen einer Schwenkbewegung des Schalthebels um eine erste Schwenkachse in eine Schwenkbewegung des Schalthebelpositionsgebers in der nichtgekrümmten Ebene dient und eine Gelenkverbindung zum Umsetzen einer Schwenkbewegung des Schalthebels um eine zweite Schwenkachse in eine lineare Bewegung des Schalthebelpositionsgebers in der nichtgekrümmten Ebene zum Einsatz kommt, so dass die Schalthebelpositionen des Schalthebels in der nichtgekrümmten Ebene detektierbar sind.

Der Erfindung liegt daher die Aufgabe zugrunde, eine einfache Mechanik anzugeben, die mit einem Minimum an Toleranzen ein Erfassen der Bewegungsräume 'Wählen' und 'Schalten' mithilfe einer planaren Anordnung von Sensoren einheitlicher Charakteristik ermöglicht.

Diese Aufgabe ist erfindungsgemäß durch die Merkmale des unabhängigen Patentanspruchs 1 gelöst.

Die Aufgabe wird insbesondere gelöst durch eine Vorrichtung zum Übersetzen einer zweiachsigen Schwenkbewegung eines Schalthebels in eine planare Bewegung eines Schalthebelpositionsgebers mit einem Führungselement zur Beschränkung der Bewegung des Schalthebelpositionsgebers auf eine Bewegung in einer nichtgekrümmten Ebene, einem Übertragungselement zum Übertragen einer Schwenkbewegung des Schalthebels um eine erste Schwenkachse in eine Schwenkbewegung des Schalthebelpositionsgebers in der nichtgekrümmten Ebene, und einer Gelenkverbindung zum Umsetzen einer Schwenkbewegung des Schalthebels um eine zweite Schwenkachse in eine lineare Bewegung des Schalthebelpositionsgebers in der nichtgekrümmten Ebene, so dass die Schalthebelpositionen des Schalthebels in der nichtgekrümmten Ebene detektierbar sind.

Zur Übertragung der Schwenkbewegungen des Schalthebels an den Schalthebelpositionsgeber ist dabei die erste Schwenkachse des Schalthebels in Form eines Lagerbolzens mit einem als Gelenkkopf ausgestalteten Ende zur Aufnahme im Schalthebelpositionsgeber ausgeführt.

Obige Aufgabe wird ferner gelöst von einem elektromechanischen Schalthebelsystem mit einem zweiachsig gelagerten Schalthebel, einer erfindungsgemäßen Vorrichtung zum Übersetzen einer zweiachsigen Schwenkbewegung eines Schalthebels in eine planare Bewegung eines Schalthebelpositionsgebers, und Sensoren, die zum Detektieren bestimmter Schalthebelpositionen des Schalthebels parallel zur nichtgekrümmten Ebene dem Schalthebelpositionsgeber gegenüber angeordnet sind.

Die erfindungsgemäße Vorrichtung gestattet die Verwendung einer planar aufgebauten standardmäßigen Sensorik in einem elektromechanischen Schalthebelsystem bei geringem konstruktiven Aufwand.

Für eine raumsparende Ausführung des elektromechanischen Schalthebelsystems ist die Gelenkverbindung vorteilhaft seitlich des Schalthebels angebracht.

Zur Übertragung der Schwenkbewegungen des Schalthebels an den Schalthebelpositionsgeber ist die erste Schwenkachse des Schalthebels zweckmäßig in Form eines Lagerbolzens mit einem als Gelenkkopf ausgestalteten Ende zur Aufnahme im Schalthebelpositionsgeber ausgeführt. Der Schalthebelpositionsgeber weist dabei zur Aufnahme des Gelenkkopfs vorteilhaft eine längsförmige Aussparung mit einer Querschnittsgeometrie auf, die im wesentlichen die Geometrie des Gelenkkopfs quer zur Achse des Lagerbolzens bei gleichen oder größeren Abmessungen wiedergibt sodass der Gelenkkopf ohne Kraftübertragung längs der Aussparung gleiten kann, aber in zumindest einer Richtung quer hierzu eine sichere Kraftübertragung gewährleistet ist.

Für ein ausschließliches Übertragen der Schwenkbewegung der ersten Schwenkachse des Schalthebels an den Schalthebelpositionsgeber ist der Gelenkkopf bevorzugt kugelförmig ausgestaltet. Soll auch eine Drehung der ersten Schwenkachse an den Schalthebelpositionsgeber übertragen werden, so weist der Gelenkkopf vorzugsweise eine zylinderförmige Geometrie auf, wobei die Symmetrieachse des zylinderförmigen Gelenkkopfs im wesentlichen senkrecht zur ersten Schwenkachse bzw. Achse des Lagerbolzens angeordnet ist. Der Gelenkkopf kann hierbei vorteilhaft das Übertragungselement bilden.

In einer bevorzugten Ausführungsform umgreift das Übertragungselement den Schalthebel in einem Abstand zur ersten Schwenkachse des Schalthebels. Zweckmäßig weist es hierzu ein bügelförmiges Element auf, das den Schalthebel umfasst. Für das sichere Übertragen der gewünschten und zum Ausschließen der anderen Schwenkbewegung umgreift das bügelförmige Element den Schalthebel so, dass der Schalthebel bei einem Schwenken um seine erste Schwenkachse das Übertragungselement mitführt und bei Schwenken um seine zweite Schwenkachse sich im bügelförmigen Element frei bewegt.

Ein sicheres Detektieren der Schalthebelpositionen wird durch Anordnen des Führungselements mit definiertem Bezug zum Schalthebelgehäuse erreicht.

Das Übertragungselement kann um einen Drehzapfen schwenkbar gelagert sein, sodass eine Schwenkbewegung des Schalthebels um die erste Schwenkachse auf einfache Weise in eine Schwenkbewegung des Übertragungselements übersetzt wird. Die geometrische Lage der Achse des Drehzapfens kann hierbei innerhalb der von der ersten Schwenkachse des Schalthebels einnehmbaren Ausrichtungen angeordnet sein damit eine Schwenkbewegung des Lagerzapfens ohne besondere Vorkehrungen auf den Schalthebelpositionsgeber übertragbar ist.

Entsprechend einer vorteilhaften Weiterentwicklung kann der Drehzapfen zur Beschränkung einer Bewegung des Übertragungselements auf die nichtgekrümmte Ebene ausgebildet sein und damit einen Teil des Führungselements darstellen. Bedarfsweise kann auch am Übertragungselement ein Führungselement ausgebildet sein. Das Führungselement kann hierbei vorzugsweise von einer Aussparung im Übertragungselement gebildet sein, worin der Schalthebelpositionsgeber radial zur - Schwenkachse des Übertragungselements verschiebbar ist.

In einer bevorzugten Ausführungsform weist der Schalthebelpositionsgeber einen Aktuator in Form eines Permanentmagneten auf. Die Sensoren sind bevorzugt als Hallsensoren ausgeführt.

Eine erfindungsgemäße Vorrichtung bzw. ein erfindungsgemäßes elektromechanisches Schalthebelsystem kann beispielsweise in Kraftfahrzeugen wie Personen- oder Nutzkraflwagen verwendet werden.

Im Folgenden wird die Erfindung anhand von Ausführungsbeispielen mit Bezug auf die beiliegenden Figuren erläutert, in denen
Figur 1 eine Schalthebelmechanik zur Anwendung eines erfindungsgemäßen Bewegungsübersetzers zeigt,
Figur 2 einen Längsschnitt durch eine erfindungsgemäße Gelenkverbindung zwischen der ersten Schwenkachse eines Schalthebels und dem Gelenkkörper zeigt,
Figur 3 Querschnitte einer erfindungsgemäße Gelenkverbindung gemäß einer ersten Ausführungsform (a) und einer zweiten Ausführungsform bei einem ersten Schwenkwinkel (b) bzw. bei einem zweiten Schwenkwinkel (c) der ersten Schwenkachse der Schalthebelmechanik zeigt,
Figur 4 eine elektromechanische Schalthebelbaugruppe mit einer ersten Ausführungsform eines erfindungsgemäßen Bewegungsübersetzers zeigt,
Figur 5 den Verschiebeweg des Aktuators für eine erste Ausführungsform eines erfindungsgemäßen Bewegungsübersetzers zeigt,
Figur 6 den mechanischen Teil einer elektromechanische Schalthebelbaugruppe mit einer zweiten Ausführungsform eines erfindungsgemäßen Bewegungsübersetzers zeigt, und
Figur 7 den Verschiebeweg des Aktuators für eine zweite Ausführungsform eines erfindungsgemäßen Bewegungsübersetzers zeigt,

Funktionell gleichwertige Elemente sind in den Figuren mit gleichen Bezugszeichen versehen.

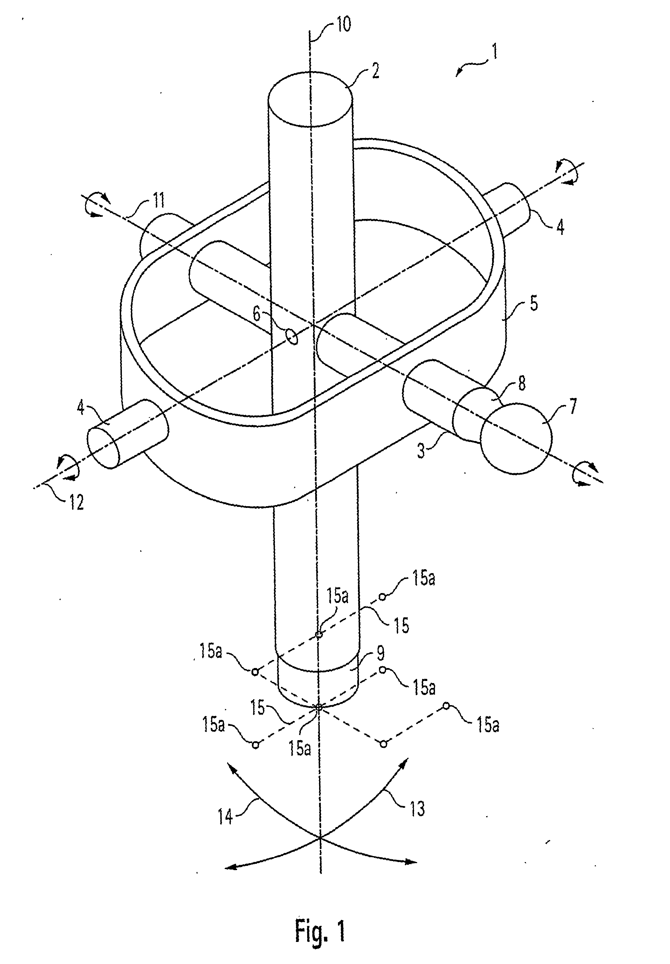

Der prinzipielle Aufbau einer Schalthebelmechanik 1, wie sie für den Aufbau eines elektromechanischen Schaltsystems in Kraftfahrzeugen Anwendung findet, ist in der Figur 1 dargestellt. Der Schalthebel 2 dessen oberes, meist von einem Fahrzeugschaltknauf abgeschlossenes Ende in der Figur 1 nicht dargestellt ist, besitzt an seinem unteren Ende ein, entlang der Schalthebelachse 10 verschiebbares Rastelement 9 dessen Oberflächengestaltung ein rastendes Verschieben in einer Rastierkontur ermöglicht. Das Verschieben des Rastelements 9 in der Rastierkontur wird durch Schwenken des Schalthebels 2 um zwei, meist im rechten Winkel zueinander angeordnete Schwenkachsen 11 und 12 bewirkt. Die Rastierkontur beschränkt dabei die Schalthebelbewegung so, dass das Rastelement nur entlang vorgegebener Wege verschoben werden kann. Die gestrichelt gezeichneten Linien 15 stellen ein Beispiel eines derartigen Wegeverlaufs dar. Die Kreise 15a auf den gestrichelten Linien 15 geben die Lage von beispielhaften Rastpositionen der Rastierkontur an.

Die erste Schwenkachse 11 des Schalthebels 2 wird von einem Lagerbolzen 3 gebildet dessen Symmetrieachse vorzugsweise durch den Schalthebel 2 im rechten Winkel zu dessen Längsachse 10 geführt ist. Der Lagerbolzen 3 kann beispielsweise in einer durchgehenden Bohrung des Schalthebels 2 aufgenommen sein, er kann aber auch zweistückig ausgeführt an sich gegenüberliegenden Stellen des Schalthebels angebracht sein. Der Querschnitt des Lagerbolzens 3 kann zumindest im Bereich der Aufnahme durch den Schalthebel mit einem nichtkreisförmigen Profil für eine verdrehsichere Verbindung ausgestattet sein. Die Sicherheit gegen ein Verdrehen des Lagerbolzens kann jedoch auch mittels eines Sicherungsstiftes 6, wie in der Figur 1 dargestellt oder durch eine einstückige Ausführung von Schalthebel und Lagerbolzen erzielt werden.

Der Schalthebel 2 ist entweder am Lagerbolzen 3, oder jener in einer Halterung 5 drehbar gelagert, sodass der Schalthebel 2 um die Schwenkachse 11 des Lagerbolzens 3 geschwenkt werden kann. An zwei sich gegenüberliegenden Stellen der Halterung 5 sind zwei weitere Bolzen 4 angebracht, deren Symmetrieachsen eine gemeinsame zweite Schwenkachse 12 für den Schalthebel bilden. Die zweite Schwenkachse 12 ist bevorzugt im rechten Winkel zur ersten Schwenkachse 11 angeordnet. Das Querschnittsprofil der Bolzen 4 ist nicht notwendigerweise kreisförmig. Es ist jedoch geeignet in einer Lagerschale z.B. eines Schalthebelgehäuses oder eines Trägers aufgenommen zu werden und eine Schwenkbewegung im erforderlichen Winkelbereich um die Schwenkachse 12 zu ermöglichen.

Im Zusammenwirken bilden die beiden Schwenkachsen 11 und 12 ein Kreuzgelenk bzw. eine Art kardanischer Lagerung. Eine Bewegung des Rastelements 9 ist daher auf eine Bewegung in einer gekrümmten Fläche beschränkt, wie sie von den Pfeilen 13 und 14 in der Figur 1 angedeutet ist. Wird am Rastelement 9 oder an einem starr mit dem Schalthebel 2 verbundenen Bauteil ein Aktuator angebracht, so bewegt sich der Aktuator bei Schwenken des Schalthebels 2 ebenfalls in einer zweifach gekrümmten Ebene. Die Sensoren einer Schaltsensorik müssen für diese Fälle entweder ebenfalls in einer entsprechend gekrümmten Ebene angeordnet sein, oder bei planarer Anordnung in ihrem Ansprechverhalten individuell den unterschiedlichen Abständen zum Aktuator angepasst werden.

Um den Aktuator bei Schwenken des Schalthebels 2 erfindungsgemäß in einer planaren, d.h. nichtgekrümmten Ebene zu führen, wird der Aktuator beweglich mit dem Schalthebel 2 verbunden. Dabei sind zwei voneinander unabhängige Schwenkbewegungen, nämlich um die erste Schwenkachse 11 und die zweite Schwenkachse 12 in zwei voneinander unabhängige Bewegungen des Aktuators in einer planaren Ebene zu übersetzen.

Bei Schwenken des Schalthebels 2 um die erste Schwenkachse 11 beschreibt der Schalthebel einen Bogen in der von der zweiten Schwenkachse 12 und der Schalthebelachse 10 aufgespannten Ebene. Ist der Lagerbolzens 3 verdrehsicher mit dem Schalthebel 2 verbunden, so führt diese Schwenkbewegung auch zu einem Drehen des Lagerbolzens um seine Achse 11. Ein Schwenken des Schalthebels 2 um die zweite Schwenkachse 12 führt dagegen zu einer Auslenkung bzw. einem Schwenken des Lagerbolzens 3 um diese zweite Schwenkachse 12.

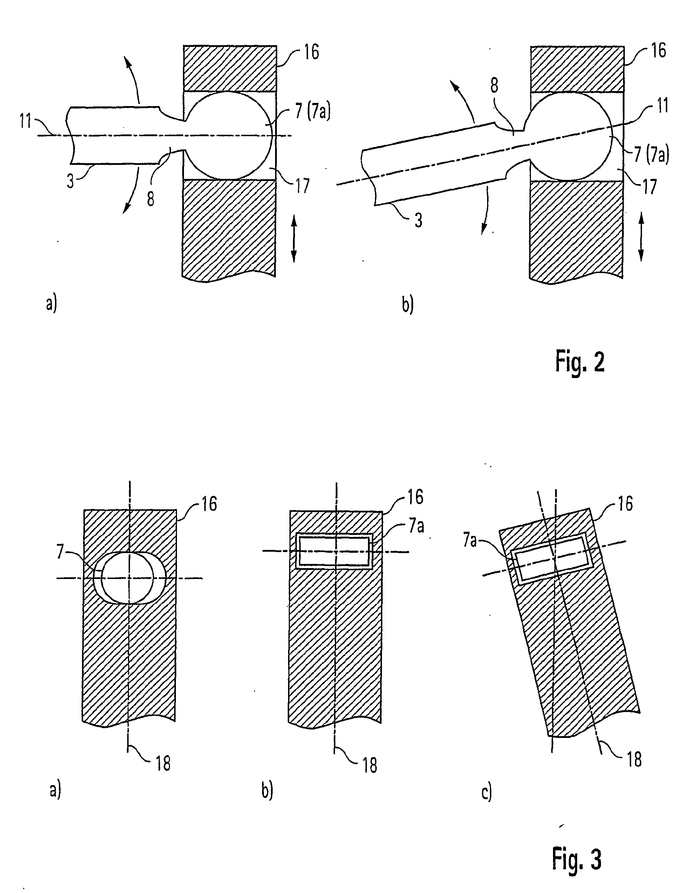

Je nach Art der Verbindung zwischen Lagerbolzen 3 und Schalthebel 2 können daher am Lagerbolzen 3 eine oder beide Schwenkbewegungen abgegriffen werden. Um ein Schwenken des Lagerbolzens 3 in eine lineare Schiebebewegung eines angelenkten Gelenkkörpers 16 umzusetzen, ist ein Ende des Lagerbolzens 3 als Gelenkkopf 7 bzw. 7a ausgebildet. Der Gelenkkopf 7 zeigt in der, von Schalthebelachse 10 und der ersten Schwenkachse 11 aufgespannten Ebene ein vorzugsweise kreisförmiges Profil. Wie im Längsschnitt der Figur 2 dargestellt, kann damit eine als längsförmige Aussparung in einem Gelenkkörper 16 gestaltete Lageröffnung 17 des Gelenkkörpers 16 über den Gelenkkopf geschoben und gegen die Schwenkachse 11 verkippt werden.

Der Gelenkkörper besitzt eine Montageaufnahme 22 zum Anbringen eines Aktuators. Zusammen mit dem Aktuator bildet der Gelenkkörper einen Schalthebelpositionsgeber.

Eine nicht in der Figur 2 dargestellte Führung hält den Gelenkkörper 16 in einer räumlich bestimmten Verschiebeebene. Je nach Konstruktionsanforderung kann diese Verschiebeebene parallel oder in einem definierten Winkel zur Schalthebelachse 10 bei der Neutral- bzw. Grundstellung des Schalthebels 2 eingerichtet sein.

Bei Schwenken des Schalthebels 2 um die zweite Schwenkachse 12 bewegt sich der Gelenkkopf 7 bzw. 7a auf einem Kreisbogen mit dem Zentrum im Schnittpunkt von Schalthebelachse 10 und zweiter Schwenkachse 12. Es ändert sich daher nicht nur der Winkel zwischen der Lagerbolzenachse 11 und der Verschiebeebene des Gelenkkörpers 16, sondern der Gelenkkopf rutscht ferner je nach Schwenkrichtung tiefer in die längsförmige Lageröffnung 17 hinein oder aus ihr zurück. Die Darstellungen a) und b) der Figur 2 illustrieren diesen Vorgang. Um ein Verkanten des Lagerbolzens 3 mit dem Gelenkkörper 16 zu verhindern, kann der Durchmesser des Gelenkkopfs 7 bzw. 7a entsprechend groß gewählt oder wie in den Figuren 1 und 2 zu sehen ein verjüngter Hals 8 am Ansatz des Gelenkkopfs ausgebildet werden.

Die Lageröffnung 17 kann in Form einer durchgehenden Aussparung aber auch als Sackloch am Schiebeelement 16 ausgeführt sein. Muss eine Schwenkbewegung des Lagerbolzen 3 quer zur Längsrichtung 18 des Gelenkkörpers 16 nicht in einen Bewegungsanteil entlang der Längsrichtung 18 und einen Bewegungsanteil quer dazu aufgeteilt werden, so entspricht der Querschnitt der Lageröffnung im wesentlichen der Umfangsgeometrie des Gelenkkopfs 7 bzw. 7a, wie sie sich aus der Ansicht in Richtung der ersten Schwenkachse 11 ergibt. Andernfalls entspricht die Querschnittsgeometrie der Lageröffnung einer quer zur Längsrichtung 18 gestreckten Umfangsgeometrie des Gelenkkopfs. Damit kann sich der Gelenkkopf innerhalb bestimmter Grenzen in der Lageröffnung quer zur Längsrichtung 18 des Gelenkkörpers 16 frei bewegen. Kräfte werden somit nur in Längsrichtung des Gelenkkörpers 16 übertragen. Die Verbreiterung der Lageröffnung gegenüber der Gelenkkopfgeometrie ergibt sich aus den maximalen Schwenkwinkeln um die erste und zweite Schwenkachse. Bei kleinen Schwenkwinkeln ist sie vernachlässigbar.

In einer ersten Ausführungsform der vorliegenden Erfindung wird nur die Schwenkbewegung des Lagerbolzens 3 über den Gelenkkopf 7 an den Gelenkkörper 16 übertragen. Eine eventuelle Drehung des Lagerbolzens 3 bleibt ungenutzt. Der Gelenkkopf 7 besitzt in diesem Fall daher vorzugsweise eine kugelige Form.

In einer zweiten Ausführungsform der vorliegenden Erfindung wird zusätzlich die Drehbewegung des Lagerbolzens 3 in eine Drehung des Gelenkkörpers 16 um die erste Schwenkachse 11 übersetzt. Die Umfangsgeometrie des Gelenkkopfs 7a senkrecht zur ersten Schwenkachse 11 weicht in diesem Fall deutlich von einer Kreisgeometrie ab. Als Gelenkkopfgeometrien werden vorzugsweise von der Kugelform abweichende rotationssymmetrische Körper verwendet, wobei die Rotationssymnietrieachse senkrecht zur Schwenkachse 11 verläuft. Als Umfangsgeometrien können beispielsweise Vielecke mit geraden Kantenzahlen, Ellipsen oder dergleichen verwendet werden.

Das Funktionsprinzip der Drehmomentübertragung ist in den Darstellungen der Figur 3 illustriert. Bei kugelförmiger Ausgestaltung des Gelenkkopfs 7 überträgt sich eine Drehung des Lagerbolzens 3 um seine Achse 11 nicht auf den Gelenkkörper 16, so dass die Längsrichtung 18 des Gelenkkörpers 16 in ihrer Lage unverändert beibehält (Figur 3a). Bei Verwendung eines nichtkugelförmigen, rotationssymmetrischen Gelenkkopfs 7a, wie dem zylinderförmigen Gelenkkopf der Figuren 3b und c wird die Drehbewegung des Lagerbolzens dagegen in eine entsprechende Auslenkung des Gelenkkörpers 16 umgesetzt. Die Auslenkung der Längsrichtung 18 aus der Startlage entspricht dem Drehwinkel des Lagerbolzens 3.

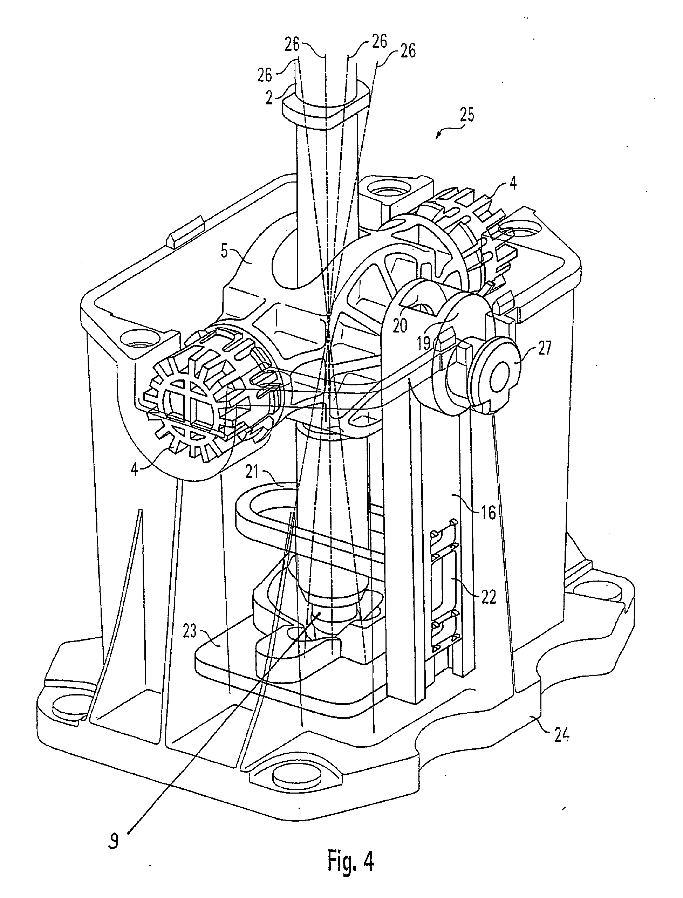

Die Figur 4 gibt eine Ansicht einer Schalthebelbaugruppe 25 mit einem Bewegungsübersetzer gemäß einer ersten Ausführungsform der vorliegenden Erfindung wieder. Kemstück der Baugruppe 25 ist ein Schalthebel 2, der wie mit Bezug auf die Figur 1 beschrieben in einem Kreuzgelenk gelagert ist. Das Rastelement 9 am unteren Ende des Schalthebels greift in eine Rastierkontur 23, so dass der Schalthebel 2 nur zwischen definierten Positionen 26 bewegt werden kann. Ein Schalthebelgehäuse 24 nimmt die Schalthebelmechanik auf. An ihm sind Lagerschalen ausgebildet, in denen die Bolzen 4 des Kreuzgelenks drehbar aufgenommen werden. Im Schalthebelgehäuse 24 befinden sich auch die Rastierkontur 23, die erfindungsgemäße Vorrichtung zur Übersetzung der Schalthebelbewegung sowie die nicht in der Abbildung dargestellte Sensorik.

Der Gelenkkörper 16 ist wie in den Figuren 2 und 3a dargestellt am Gelenkkopf 7 angebracht. Es besitzt eine längliche Bauform, wobei die Längsrichtung 18 radial zur ersten Schwenkachse des Schalthebels angeordnet ist. Der Gelenkkörper 16 ist in einer längsförmigen Aussparung 20 eines ihn umgebenden Übertragungselements 19 aufgenommen. Er kann entlang der Längsrichtung der Aussparung 20 verschoben werden.

Das Übertragungselement 19 ist mit einem Drehzapfen 27 an einer Wandung des Schalthebelgehäuses 24 schwenkbar gelagert. Die geometrische Lage der Achse des Drehzapfens 27 ist innerhalb der von der ersten Schwenkachse 11 einnehmbaren Ausrichtungen bzw. Lagen angeordnet. Die Lagerung des Drehzapfens 27 z.B. am Schalthebelgehäuse 24 kann starr oder linear verschiebbar ausgeführt sein. Bei linearer Verschiebbarkeit folgt die Verschieberichtung der Schwenkbewegung des Lagerzapfens 3.

Eine Öffnung im Übertragungselement 19 gegenüber dem Drehzapfen 27 erlaubt das Durchführen des Lagerbolzens 3 mit dem Gelenkkopf 7. Die Abmessungen der Öffnung gestatten ein ungehindertes Schwenken des Lagerbolzens 3 innerhalb des, durch die Rastierkontur vorgegebenen Bereichs. Ein Schwenken des Lagerbolzens 3 um die zweite Schwenkachse 12 wird durch diese Anordnung in eine lineare Verschiebung des Gelenkkörpers 16 entlang der Längsrichtung der Aussparung 20 im Übertragungselement 19 umgesetzt. Die Längsrichtung der Aussparung 20 stimmt hierbei mit der Längsrichtung 18 des Gelenkkörpers 16 überein.

Mit Abstand zur Achse des Drehzapfens 27 ist am Übertragungselement 19 ein Bügel 21 angeordnet, der den Schalthebel in seinem unteren Bereich umgreift. Alternativ kann der Bügel 21 den Schalthebel auch in seinem oberen Bereich umgreifen. Der Bügel besitzt ein längliches Öhr, durch das der Schalthebel 2 geführt ist. Die Breite des Bügelöhrs ist parallel zur zweiten Schwenkachse 12 des Schalthebels 2 ausgerichtet und entspricht im wesentlichen dem Durchmesser bzw. der Breite des Schalthebels. Die Länge des Bügelöhrs ist parallel zu ersten Schwenkachse 11 des Schalthebels 2 ausgerichtet und erlaubt ein ungehindertes Schwenken des Schalthebels 2 um die zweite Schwenkachse für alle durch die Rastierkontur 23 festgelegten Positionen 26.

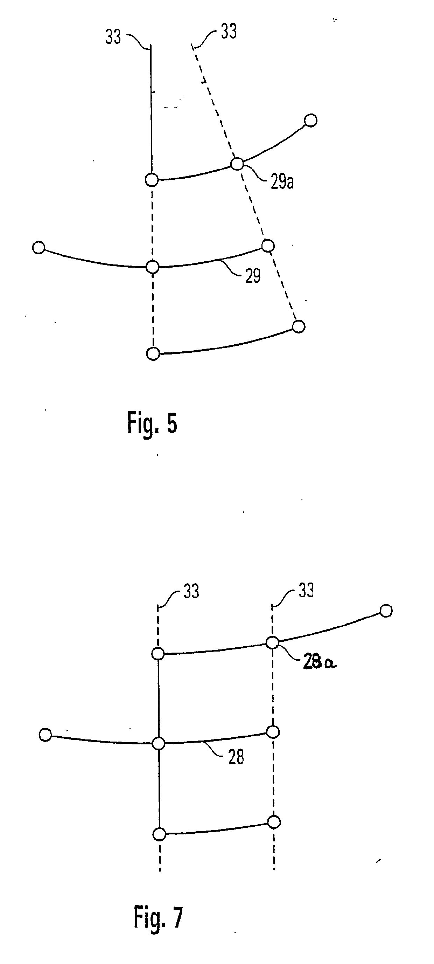

Wird der Schalthebel 2 um die erste Schwenkachse 11 geschwenkt, so nimmt er das Übertragungselement 19 am Bügel 21 mit und schwenkt es somit um die Achse des Drehzapfens 27. Ein, in einer Montageaufnahme 22 des Gelenkkörpers 16 angeordneter Aktuator beschreibt entsprechend einen Bogen in einer Verschiebebene senkrecht zur Achse des Drehzapfens 27. Ein Schwenken des Schalthebels 2 um die zweite Schwenkachse 12 bewirkt dagegen eine Längsverschiebung des Gelenkkörpers 16 in der Aussparung 20 des Übertragungselements 19 und damit eine Verschiebung des Aktuators radial zur Achse des Drehzapfens 27. Da der Drehzapfen 27 am Übertragungselement 19 angeordnet ist, kann der Aktuator hierbei die Verschiebeebene nicht verlassen. Die in der Figur 1 gestrichelt angedeuteten Schaltwege 15 werden somit in die in der Figur 5 gezeigten Verschiebewege 29 des Aktuators umgesetzt. Die Ringe 29a geben die Position des Aktuators bei den Rastpositionen 15a des Schalthebels 2 an. Beschränkt die Rastierkontur 23 wie in den Figuren 1 und 5 dargestellt, die Schwenkbewegungen des Lagerbolzens 3 auf eine Auslenkung des Gelenkkopfs 7 in Richtung der Längsausdehnung der Aussparung 20 im Übertragungselement 19 zur Aufnahme des Gelenkkörpers 16, so kann der Querschnitt der Lageröffnung 17 ungestreckt der Umfangsgeometrie des Gelenkkopfs 7 angepasst werden, da keine Bewegungsanteile quer zur Längsrichtung 18 auftreten.

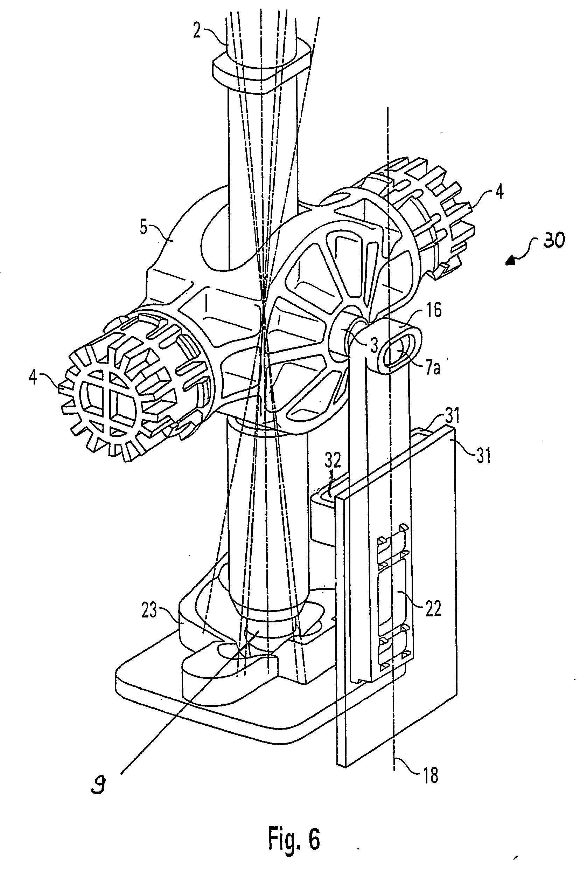

Figur 6 zeigt eine Schalthebelbaugruppe 30 mit einer Vorrichtung zum Übersetzen einer zweiachsigen Schwenkbewegung eines Schalthebels 2 gemäß einer zweiten Ausführungsform der vorliegenden Erfindung. Der Gelenkkörper 16 besitzt an einem Ende eine Lageröffnung 17 mit unterschiedlichen Abmessungen quer und längs seiner Längsausdehnung 18. Im dargestellten Beispiel ist der Gelenkkopf 7a zylinderförmig ausgestaltet und mit der Symmetrieachse des Gelenkkopfs 7a quer zur Längsrichtung 18 in der Lageröffnung 17 aufgenommen. Der Querschnitt der Lageröffnung 17 entspricht der Umfangsgeometrie des Gelenkkopfs 7a in seiner Ansicht in Richtung der ersten Schwenkachse 11.

Das zweite Ende des Gelenkkörpers 16 ist im Öhr eines Bügels 31 so geführt, dass eine Bewegung des Gelenkkörpers 16 auf die durch die Bügellängswand 32 festgelegte Verschiebeebene beschränkt ist. Der Lagerbolzen 3 ist fest mit dem Schalthebel verbunden.

Ein Schwenken des Schalthebels 2 um die erste Schwenkachse 11 bewirkt ein Schwenken des Gelenkkörpers 16 um diese Schwenkachse 11 in der durch die Bügellängswand 32 festgelegten Verschiebeebene. Ein Schwenken des Schalthebels 2 um die zweite Schwenkachse 12 bewirkt ein Schwenken des Lagerbolzens um diese Achse 12. Der Gelenkkopf 7a bewegt sich damit auf einem Kreisbogen mit der Schwenkachse 12 als Zentrum. Der Bewegungsanteil senkrecht zur Verschiebeebene hat ein Verschieben des Gelenkkopfs 7a in der Lageröffnung 17 senkrecht zur Verschiebeebene zur Folge und verändert dadurch die Lage des Gelenkkörpers 16 nicht. Der Bewegungsanteil parallel zur Verschiebeebene bewirkt eine vertikale Verschiebung des Gelenkkörpers in dieser Ebene.

Die in der Figur 1 gestrichelt angedeuteten Schaltwege 15 werden somit in die in der Figur 7 gezeigten Verschiebewege 28 des Aktuators umgesetzt. Die Ringe 28a geben die Position des Aktuators bei den Rastpositionen 15a des Schalthebels 2 an. Im Gegensatz zur ersten Ausführungsform der vorliegenden Erfindung sind die gestrichelt angedeuteten Verbindungslinien 33 von Positionen des Aktuators bei gleichem Schwenkwinkel des Schalthebels 2 um die erste Schwenkachse 11 aber unterschiedlichem Schwenkwinkel um die zweite Schwenkachse 12 parallel und nicht geneigt zueinander ausgerichtet.

### Bezugszeichenliste

- 1: Schalthebelmechanik
- 2: Schalthebel
- 3: Lagerbolzen
- 4: Bolzen
- 5: Halterung
- 6: Sicherungsstift
- 7, 7a: Gelenkkopf
- 8: verjüngter Hals
- 9: Rastelement
- 10: Schalthebelachse
- 11: erste Schwenkachse
- 12: zweite Schwenkachse
- 13, 14: Pfeil
- 15: Wegeverlauf
- 15a: Rastpositionen .
- 16: Gelenkkörper
- 17: Lageröffnung
- 18: Längsrichtung
- 19: Übertragungselement
- 20: Aussparung
- 21,31: Bügel
- 22: Montageöffnung
- 23: Rastierkontur
- 24: Schalthebelgehäuse
- 25, 30: Schalthebelbaugruppe
- 26: definierte Positionen
- 27: Drehzapfen
- 28, 29: Verschiebewege des Aktuators
- 28a, 29a: Position des Aktuators
- 32: Bügellängswand

## Patentansprüche

1. Vorrichtung zum Übersetzen einer zweiachsigen Schwenkbewegung eines Schalthebels (2) in eine planare Bewegung eines Schalthebelpositionsgebers mit
- einem Führungselement (20, 27, 31, 32) zur Beschränkung der Bewegung des Schalthebelpositionsgebers auf eine Bewegung in einer nichtgekrümmten Ebene,
- einem Übertragungselement (19, 7a) zum Übertragen einer Schwenkbewegung des Schalthebels (2) um eine erste Schwenkachse (11) in eine Schwenkbewegung des Schalthebelpositionsgebers in der nichtgekrümmten Ebene, und
- einer Gelenkverbindung zum Umsetzen einer Schwenkbewegung des Schalthebels (2) um eine zweite Schwenkachse (12) in eine lineare Bewegung des Schalthebelpositionsgebers in der nichtgekrümmten Ebene, so dass die Schalthebelpositionen (15a) des Schalthebels (2) in der nichtgekrümmten Ebene detektierbar sind,
**dadurch gekennzeichnet,**
**dass** die erste Schwenkachse (11) des Schalthebels als Lagerbolzen (3) mit einem als Gelenkkopf (7, 7a) der Gelenkverbindung ausgestalteten Ende zur Aufnahme im Schalthebelpositionsgeber ausgeführt ist.

2. Vorrichtung nach Anspruch 1,
**dadurch gekennzeichnet,**
**dass** die Gelenkverbindung seitlich des Schalthebels (2) angebracht ist.

3. Vorrichtung nach Anspruch 1 oder 2,
**dadurch gekennzeichnet,**
**dass** der Schalthebelpositionsgeber zur Aufnahme des Gelenkkopfs eine längsförmige Lager öffnung (17) mit einer Querschnittsgeometrie aufweist, die im wesentlichen die Geometrie des Gelenkkopfs (7, 7a) quer zur Achse des Lagerbolzens (3) bei gleichen oder größeren Abmessungen wiedergibt.

4. Vorrichtung nach einem der vorstehend genannten Ansprüche,
**dadurch gekennzeichnet,**
**dass** der Gelenkkopf (7) kugelförmig ausgestaltet ist.

5. Vorrichtung nach einem der vorstehend genannten Ansprüche,
**dadurch gekennzeichnet,**
**dass** der Gelenkkopf (7a) zylinderförmig ausgestaltet ist.

6. Vorrichtung nach Anspruch 5,
**dadurch gekennzeichnet,**
**dass** die Symmetrieachse des zylinderförmigen Gelenkkopfs (7a) im wesentlichen senkrecht zur Achse (11) des Lagerbolzens (3) angeordnet ist.

7. Vorrichtung nach Anspruch 6,
**dadurch gekennzeichnet,**
**dass** der Gelenkkopf (7a) das Übertragungselement bildet.

8. Vorrichtung nach einem der Ansprüche 1 bis 4,
**dadurch gekennzeichnet,**
**dass** das Übertragungselement (19) den Schalthebel (2) in einem Abstand zur ersten Schwenkachse (11) des Schalthebels (2) umgreift.

9. Vorrichtung nach Anspruch 8,
**dadurch gekennzeichnet,**
**dass** das Übertragungselement (19) ein bügelförmiges Element (21) zum Umgreifen des Schalthebels (2) aufweist.

10. Vorrichtung nach Anspruch 9,
**dadurch gekennzeichnet,**
**dass** das bügelförmige Element (21) den Schalthebel (2) so umgreift, dass der Schalthebel (2) bei Schwenken um seine erste Schwenkachse (11) das Übertragungselement (19) mitführt und bei Schwenken um seine zweite Schwenkachse (12) sich im bügelförmigen Element (21) frei bewegt.

11. Vorrichtung nach einem der vorstehend genannten Ansprüche,
**dadurch gekennzeichnet,**
**dass** das Führungselement (20, 27, 31, 32) mit definiertem Bezug zu einem Schalthebelgehäuse (24) angeordnet ist.

12. Vorrichtung nach einem der Ansprüche 8 bis 11,
**dadurch gekennzeichnet,**
**dass** das Übertragungselement (19) um einen Drehzapfen (27) schwenkbar gelagert ist.

13. Vorrichtung nach Anspruch 12,
**dadurch gekennzeichnet,**
**dass** die geometrische Lage der Achse des Drehzapfens (27) innerhalb der von der ersten Schwenkachse (11) des Schalthebels (2) einnehmbaren Ausrichtungen angeordnet ist.

14. Vorrichtung nach Anspruch 12 oder 13,
**dadurch gekennzeichnet,**
**dass** der Drehzapfen (27) zur Beschränkung einer Bewegung des Übertragungselements (19) auf die nichtgekrümmte Ebene ausgebildet ist.

15. Vorrichtung nach Anspruch 14,
**dadurch gekennzeichnet,**
**dass** am Übertragungselement (19) ein Führungselement ausgebildet ist.

16. Vorrichtung nach Anspruch 15,
**dadurch gekennzeichnet,**
**dass** das Führungselement von einer Aussparung (20) im Übertragungselement (19) gebildet ist, in welcher der Schalthebelpositionsgeber radial zur Schwenkachse des Übertragungselements (19) verschiebbar ist.

17. Elektromechanisches Schalthebelsystem mit
- einem zweiachsig gelagerten Schalthebel (2),
- einer Vorrichtung nach einem der Ansprüche 1 bis 16, und
- Sensoren, die zum Detektieren bestimmter Schalthebelpositionen (15a) des Schalthebels (2) parallel zur nichtgekrümmten Ebene dem Schalthebelpositionsgeber gegenüber angeordnet sind.

18. Elektromechanisches Schalthebelsystem nach Anspruch 17,
**dadurch gekennzeichnet,**
**dass** der Schalthebelpositionsgeber einen Aktuator in Form eines Permanentmagneten aufweist.

19. Elektromechanisches Schalthebelsystem nach Anspruch 17 oder 18,
**dadurch gekennzeichnet,**
**dass** die Sensoren als Hallsensoren ausgeführt sind.

## Claims

1. Device for translating a biaxial pivotal movement of a shift lever (2) into a planar movement of a shift lever position transmitter with
- a guide element (20, 27, 31, 32) for restricting the movement of the shift lever position transmitter to a movement in a non-curved plane,
- a translation element (19, 7a) for translating a pivotal movement of the shift lever (2) about a first pivot axis (11) into a pivotal movement of the shift lever position transmitter in the non-curved plane, and
- a hinge connection for converting a pivotal movement of the shift lever (2) about a second pivot axis (12) into a linear movement of the shift lever position transmitter in the non-curved plane, so that it is possible to detect the shift lever positions (15a) of the shift lever (2) in the non-curved plane,
**characterised in**
**that** the first pivot axis (11) of the shift lever is in the form of a bearing pin (3) with an end configured as a joint head (7, 7a) of the hinge connection for accommodation in the shift lever position transmitter.

2. Device according to Claim 1,
**characterised in**
**that** the hinge connection is arranged to the side of the shift lever (2).

3. Device according to Claim 1 or 2,
**characterised in**
**that**, in order to accommodate the joint head, the shift lever position transmitter comprises an elongate bearing opening (17) with a cross-sectional geometry which substantially reproduces the geometry of the joint head (7, 7a) transversely to the axis of the bearing pin (3) with the same or larger dimensions.

4. Device according to any one of the preceding Claims,
**characterised in**
**that** the joint head (7) is spherical.

5. Device according to any one of the preceding Claims,
**characterised in**
**that** the joint head (7a) is cylindrical.

6. Device according to Claim 5,
**characterised in**
**that** the axis of symmetry of the cylindrical joint head (7a) is disposed substantially perpendicularly to the axis (11) of the bearing pin (3).

7. Device according to Claim 6,
**characterised in**
**that** the joint head (7a) forms the translation element.

8. Device according to any one of Claims 1 to 4,
**characterised in**
**that** the translation element (19) embraces the shift lever (2) at a distance from the first pivot axis (11) of the shift lever (2).

9. Device according to Claim 8,
**characterised in**
**that** the translation element (19) comprises a stirrup-shaped element (21) for embracing the shift lever (2).

10. Device according to Claim 9,
**characterised in**
**that** the stirrup-shaped element (21) embraces the shift lever (2) such that the shift lever (2) carries the translation element (19) with it when it pivots about its first pivot axis (11) and moves freely in the stirrup-shaped element (21) when it pivots about its second pivot axis (12).

11. Device according to any one of the preceding Claims,
**characterised in**
**that** the guide element (20, 27, 31, 32) is disposed with a defined reference to a shift lever housing (24).

12. Device according to any one of Claims 8 to 11,
**characterised in**
**that** the translation element (19) is mounted so as to pivot about a pivot pin (27).

13. Device according to Claim 12,
**characterised in**
**that** the geometric position of the axis of the pivot pin (27) is disposed within the orientations which can be assumed by the first pivot axis (11) of the shift lever (2).

14. Device according to Claim 12 or 13,
**characterised in**
**that** the pivot pin (27) is formed to restrict a movement of the translation element (19) to the non-curved plane.

15. Device according to Claim 14,
**characterised in**
**that** a guide element is formed at the translation
element (19).

16. Device according to Claim 15,
**characterised in**
**that** the guide element is formed by an aperture (20) in the translation element (19) in which the shift lever position transmitter can be displaced radially to the pivot axis of the translation element (19).

17. Electromechanical shift lever system with
- a biaxially mounted shift lever (2),
- a device according to any one of Claims 1 to 16, and
- sensors which are disposed parallel to the non-curved plane opposite the shift lever position transmitter for detecting certain shift lever positions (15a) of the shift lever (2).

18. Electromechanical shift lever system according to Claim 17,
**characterised in**
**that** the shift lever position transmitter comprises an actuator in the form of a permanent magnet.

19. Electromechanical shift lever system according to Claim 17 or 18,
**characterised in**
**that** the sensors are constructed as Hall sensors.

## Revendications

1. Dispositif pour convertir un mouvement de pivotement suivant deux axes d'un levier de changement de vitesse (2) en un mouvement dans un plan d'un transmetteur de position de levier de changement de vitesse comportant
- un élément de guidage (20, 27, 31, 32) pour limiter le mouvement du transmetteur de position de levier de changement de vitesse à un mouvement dans un plan non courbé,
- un élément de transmission (19, 7a) pour transmettre un mouvement de pivotement du levier de changement de vitesse (2) autour d'un premier axe de pivotement (11) en un mouvement de pivotement du transmetteur de position de levier de changement de vitesse dans le plan non courbé, et
- une liaison articulée pour convertir un mouvement de pivotement du levier de changement de vitesse (2) autour d'un deuxième axe de pivotement (12) en un mouvement linéaire du transmetteur de position de levier de changement de vitesse dans le plan non courbé, de manière que les positions (15a) du levier de changement de vitesse (2) puissent être détectées dans le plan non courbé,
**caractérisé en ce que** le premier axe de pivotement (11) du levier de changement de vitesse est réalisé sous la forme d'un tourillon (3) avec une extrémité réalisée en tant que tête d'articulation (7, 7a) de la liaison articulée, destinée à être reçue dans le transmetteur de position de levier de changement de vitesse.

2. Dispositif selon la revendication 1,
**caractérisé en ce que** la liaison articulée est placée sur le côté du levier de changement de vitesse (2).

3. Dispositif selon la revendication 1 ou 2,
**caractérisé en ce que** le transmetteur de position de levier de changement de vitesse destiné à recevoir la tête d'articulation présente une ouverture d'appui (17) de forme allongée avec une géométrie de sa section transversale qui correspond sensiblement à la géométrie de la tête d'articulation (7, 7a) transversalement à l'axe du tourillon (3) pour des dimensions égales ou supérieures.

4. Dispositif selon l'une des revendications précédentes,
**caractérisé en ce que** la tête d'articulation (7) est de forme sphérique.

5. Dispositif selon l'une des revendications précédentes,
**caractérisé en ce que** la tête d'articulation (7a) est de forme cylindrique.

6. Dispositif selon la revendication 5,
**caractérisé en ce que** l'axe de symétrie de la tête d'articulation (7a) de forme cylindrique est disposé sensiblement perpendiculairement à l'axe (11) du tourillon (3).

7. Dispositif selon la revendication 6,
**caractérisé en ce que** la tête d'articulation (7a) forme l'élément de transmission.

8. Dispositif selon l'une des revendications 1 à 4,
**caractérisé en ce que** l'élément de transmission (19) entoure le levier de changement de vitesse (2) à distance du premier axe de pivotement (11) du levier de changement de vitesse (2).

9. Dispositif selon la revendication 8,
**caractérisé en ce que** l'élément de transmission (19) comporte un élément (21) en forme d'étrier pour entourer le levier de changement de vitesse (2).

10. Dispositif selon la revendication 9,
**caractérisé en ce que** l'élément (21) en forme d'étrier entoure le levier de changement de vitesse (2) de manière que le levier de changement de vitesse (2) entraîne l'élément de transmission (19), lors du pivotement autour de son premier axe de pivotement (11) et se déplace librement dans l'élément (21) en forme d'étrier, lors du pivotement autour de son deuxième axe de pivotement (12).

11. Dispositif selon l'une des revendications précédentes,
**caractérisé en ce que** l'élément de guidage (20, 27, 31, 32) est disposé suivant une relation définie par rapport à un boîtier de levier de changement de vitesse (24).

12. Dispositif selon l'une des revendications 8 à 11,
**caractérisé en ce que** l'élément de transmission (19) est monté de manière à pouvoir pivoter autour d'un pivot (27).

13. Dispositif selon la revendication 12,
**caractérisé en ce que** la position géométrique de l'axe du pivot (27) est disposée à l'intérieur des orientations que peuvent prendre le premier axe de pivotement (11) du levier de changement de vitesse (2).

14. Dispositif selon la revendication 12 ou 13,
**caractérisé en ce que** le pivot (27) est réalisé pour limiter un mouvement de l'élément de transmission (19) sur le plan non courbé.

15. Dispositif selon la revendication 14,
**caractérisé en ce qu'**un élément de guidage est réalisé sur l'élément de transmission (19).

16. Dispositif selon la revendication 15,
**caractérisé en ce que** l'élément de guidage est formé par une découpe (20) de l'élément de transmission (19), dans laquelle le transmetteur de position de levier de changement de vitesse peut coulisser radialement par rapport à l'axe de pivotement de l'élément de transmission (19).

17. Système à levier de changement de vitesse électromécanique comportant
- un levier de changement de vitesse (2) monté sur deux axes,
- un dispositif selon l'une des revendications 1 à 16, et
- des capteurs qui sont disposés, pour détecter des positions déterminées (15a) du levier de changement de vitesse (2), parallèlement au plan non courbé, face au transmetteur de position de levier de changement de vitesse.

18. Système à levier de changement de vitesse électromécanique selon la revendication 17,
**caractérisé en ce que** le transmetteur de position de levier de changement de vitesse comporte un actionneur sous la forme d'un aimant permanent.

19. Système à levier de changement de vitesse électromécanique selon la revendication 17 ou 18,
**caractérisé en ce que** les capteurs sont réalisés sous la forme de capteurs à effet Hall.
